# EUROPEAN PATENT APPLICATION

(11) **EP 1 385 250 A2**
(43) Date of publication of application: **28.01.2004**
(21) Application number: 03445067.6
(22) Date of filing: 02.06.2003
(51) Int. Cl.: H02J 3/00

(54) **An energy trading system**

(30) Priority: 03.06.2002 SE 0201651
(71) Applicant: OM Technology AB, 105 78 Stockholm (SE)
(72) Inventor: Gustafsson, Leif, 175 69 Järfälla (SE)
(74) Representative: Sandström, Staffan Sven

(57) **Abstract**

In an automated exchange system trading energy contracts a converter/ translator unit is located interconnected between the order input terminal and the computer hosting the central marketplace/orderbook of the automated exchange system. The trader using the input terminal will use the energy units and order format(s) he normally uses or the units he prefers to use to for each energy commodity. The converter unit is designed to translate the order into a system standard format that will be specified by the marketplace. The trading system including the converter/translator unit will give flexibility to the traders and still have the benefit of standardized instrument specifications between different types of commodities. Also derived orders can easily be generated in the automated, even for complex combination orders involving different energy types.

## Description

### TECHNICAL FIELD

The present invention relates to an automated exchange system, and in particular to an automated exchange designed for trading different types of energy contracts.

### BACKGROUND OF THE INVENTION AND PRIOR ART

The deregulation of energy markets that has taken place in the last years has initiated the start up of a number of new market places implemented as automated exchanges. These new market places are designed to perform trading in different kinds of energy contracts, typically natural gas and electricity, but also other types of energy can be envisaged. Contracts in natural gas and electricity have also been listed at traditional exchanges including commodity exchanges trading traditional non-energy commodities. However, the trading volumes of energy contracts at traditional exchanges have been low.

In existing market places for trading energy contracts the different energy types of contracts are usually defined and listed in different ways in order to reflect the conventional way of trading that particular energy type.

For example, a marketplace can have defined the listed electricity contracts with a lot size expressed in X MWh (Mega Watt hours) were X is dependent on the delivery period and a cost per lot expressed in $/MWh instead of a price per lot. Other exchanges could have the lot size expressed in MW and the price expressed as $/MWh. Thus, when comparing different order-books of different exchanges it is not possible to directly compare the contracts.

Further, other types of energy are conventionally listed in other formats. For example natural gas contracts can be listed with a lot size expressed in GJ (Giga Joule) or in MMBTU and the price in $/GJ or $/MMBTU. Oil contracts can be listed having a lot size expressed in barrels or gallons and the price in $/barrel or $/gallon.

In addition, a marketplace open for trade in both single orders and combination orders, i.e. an order requiring at least two different trades to take place simultaneously, will also suffer from problems relating to different energy units. Other problems will arise when prices are not specified per lot.

Combination orders can include two or more instruments and it could be for same or different number of lots for each instrument. A combination can include only one side (buy or sell) sometimes called strip or include both sides (buy and sell) sometimes called a spread. A marketplace including both single orders and combination orders can also include a functionality to calculate derived orders, sometimes termed baits, in the single instruments for the purpose of attract trading and thus increase liquidity. When trading energy contracts there can be a problem both for the trader to calculate his bid for a combination as well as for the marketplace to calculate derived orders (baits) if the units for the instruments don't fit.

In summary, the differences in the listings create a number of problems both for the user and in the system. These problems include:
- Difficulty to compare contracts (volume and price) at different exchanges listing their corresponding contracts in different ways,
- Difficulty to compare the price for the same amount of energy because different units are used for different energy commodities. In some cases not even the energy is listed directly, but the power. Instead, the instrument specification provides information about the time during which the power is to be delivered can be found, whereby the energy can be derived,
- Difficulty to generate derived orders when trading combination contracts involving different energy commodities.

### SUMMARY

It is an object of the present invention to provide an improved exchange system for trading energy contracts wherein generation of derived orders is facilitated. It is a further object of the present invention to provide an improved user interface whereby trading in different types of energy contracts is made easier.

These objects and others are obtained by the present invention as set out in the appended claims. Hence, a converter/ translator unit is located interconnected between the order input terminal and the computer hosting the central marketplace/orderbook of an automated exchange system.

The trader using the input terminal will use the energy units and order format(s) he normally uses or the units he prefers to use to for each energy commodity. The converter unit is designed to translate the order into a system standard format that will be specified by the marketplace, for example as x units per lot at the price y$/lot.

The converter/translator unit preferably has access to the specifications of all listed contracts processed in the trading system, which includes all instruments defined for the marketplaces. The converter will also receive information from the trader when he logs on to the system regarding the units he will use for different types of commodities or use a standard (set up) value for each type of contracts. The standard set-up can be specified per user group or user type.

The trading system including the converter/translator unit will give flexibility to the traders and still have the benefit of standardized instrument specifications between different types of commodities. Also derived orders can easily be generated in the automated, even for complex combination orders involving different energy types.

### BRIEF DESCRIPTION OF THE DRAWINGS

The present invention will now be described in more detail by way of non-limiting examples and with reference to the accompanying drawings, in which:
- Fig. 1 is a general view of an automated exchange system for trading energy commodity contracts.
- Fig. 2 is a flow chart illustrating different steps carried out when entering, processing, and disseminating the result of different orders in the system depicted in Fig. 1.

### DESCRIPTION OF PREFERRED EMBODIMENTS

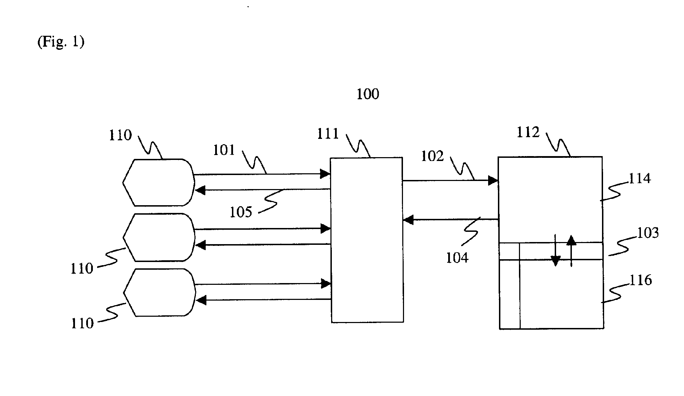

In Fig. 1, a general, logical view of an automated exchange system 100 is shown. The system 100 comprises a number of remote order input terminals 110 connected to a central computer server 112 hosting the automated exchange. Interconnected between the terminals 110 and the server 112 is a gateway unit 111. The input terminals can be any device used to create orders and send order content to the marketplace.

In a conventional automated exchange system, the gateway 111 provides decryption and validation of the orders received from the terminals 110. If the communication between the input terminals to/from the central parts of the exchange system is an Internet connection the gateway unit may be a so-called Web services system.

In the server 112, decrypted and validated orders are matched in a matching unit 114. Also the server includes an order-book 116 for storing bids and offers not directly matched by the matching procedure.

In addition to the conventional functions provided by a gateway or WEB services system, the gateway 111 is designed to translate order information relating to price and units into a standard format supported by the server 112.

Thus, regardless of the format in which an order is sent in the exchange system 100, the gateway 111 translates them into a uniform format for the server 112 to operate on.

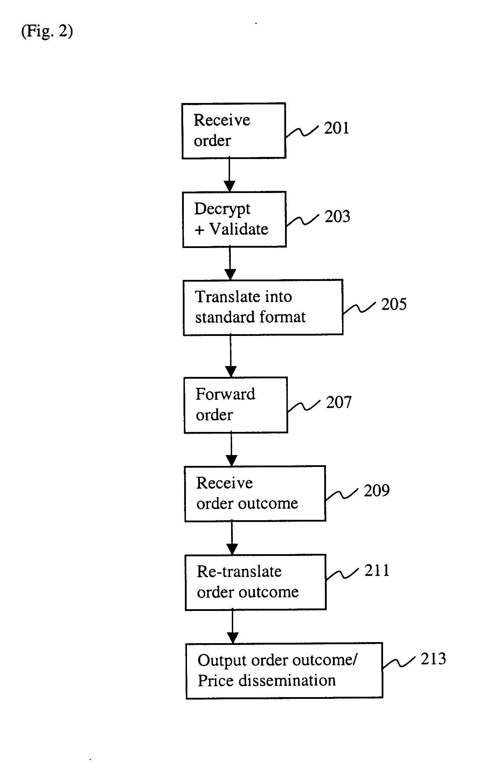

In fig. 2, a flow chart illustrating the processing of an exemplary order in the gateway 111 is illustrated. Thus, first in a step 201 an encrypted order entered into the system from an input terminal is received by the gateway 111. Next the order is decrypted and validated in the gateway, step 203.

The converter/translator unit preferably has access to the specifications of all listed contracts processed in the trading system as stored in a memory somewhere in the system, which includes all instruments defined for the marketplaces. The converter unit is also designed to automatically receive information from the trader when he logs on to the system regarding the units he will use for different types of commodities or if the trader will use a standard (set up) value for each type of instruments. All or some of this information may be required to correctly translate orders sent between the server 112 and the respective terminals 110. Thus the gateway then translates the order into a format used by the server 112 constituting the central processing unit of the system, step 205. The order is then forwarded to the server 112, step 207.

In the server conventional order processing, including but not limited to machining, storing unmatched orders in an order-book, generation of derived orders etc. is performed. The outcome of the order is then returned to the gateway or the module handling the translation between units, step 209.

In the gateway 111, the order outcome is then re-translated to a user format in accordance with user preferences. Also, the gateway 111 may translate the order outcome into other formats for other purposes, such as price dissemination etc., step 211. Finally the order outcome is output, step 213.

The translation process has logically been placed between the terminal and the marketplace. Physically the translation/ calculation can take place in a separate unit or together with the marketplace or the trading terminal.

Below some more specific examples of translations that can be performed in the system 100 are outlined references are given to both Fig. 1 and Fig. 2.

The following definitions will be used.

| **Instrument definition:** | | |
|---|---|---|
| EL Baseweek | Lot size = 100 MWh | Price in: $/lot |
| GAS Baseweek | Lot size = 100 MWh | Price in: $/lot |

### Units:

1 J = 1 Ws
1MWh = 1000 000 *3600 Ws = 3.6 GWs
1GJ = 1/3.6 MWh = 0.27777777778 MWh 1MWh = 3.6 GJ
Sometimes the unit Btu used for gas (a MMBTU is 10^12 British Thermal Units). And 1 BTU is approx. 1055 Joules. The unit therm stands for 100 000 Btu

As a first example it is assumed that the order input is an order to sell an electricity week contract, for example 75 MW at the price $24,55. The format X MW at the price $Y is the format which the trader using the input terminal 110 prefers to use for electricity contracts and in which format the order is communicated to the gateway 111.

The message 101 is received in by the gateway 111, step 201. The message is decrypted and validated in a conventional manner, step 203. Next the gateway 111, preferably using user defined settings, translates the order information contained in the message 101 into a standard order format used by the server 112, step 205

In this example it is assumed that the server 112 processes and matches order in the format X lots at the price $Y per lot, where 1 lot is equal to 100MWh of electrical energy. Thus, the gateway will translate the order received from the input terminal to 126 lots (75 MW during 168 hours {one week} = 12600 MWh or 126 lots) at the price $2455 per lot. The order information translated into this format is forwarded to the server 112.

As a second example assume a gas order input from the terminal 110. The order is: Buy bid gas week contract: 100 000 @ $2,05. The Gateway 111 will convert this order to 277,78 lots @ $738 where Quantity: 100 000GJ = 27 777,78 MWh or 277,78 lots and Price: 2,05$/GJ = 738 $ per lot.

As a third example assume a combination order, input from the input terminal 110. The order is to buy one week electricity 50MW@ $ 24,55 per MWh and sell gas one week 90 000 GJ @ $7,3 per MWh. The gateway will the combination order into: buy electricity 84 lots @ $2455 and sell gas 250 lots @ $730 and/or into one order to buy 84 El and sell 250 gas for a total cost of maximum $23720

The marketplace hosted in the server 112 up-dates the order-book and check if the orders can be matched. If there is no match, information will be sent to all participants via the gateway, in a format preferred by the respective participant/trader connected to the system via the terminals 110 indicating the new order-book content.

**Order book in marketplace.**

### In example 1

With the following order book (only best price shown):

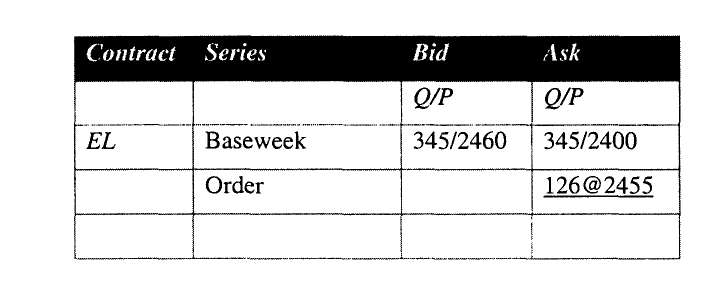

The bid in example 1 will result in a match 126 lots @ $2400 per lot which will be converted to a trade for Trader 1 75 MW @ $24,60 per MWh in the gateway 111.

### In example 2

With the following order book (only best price shown):

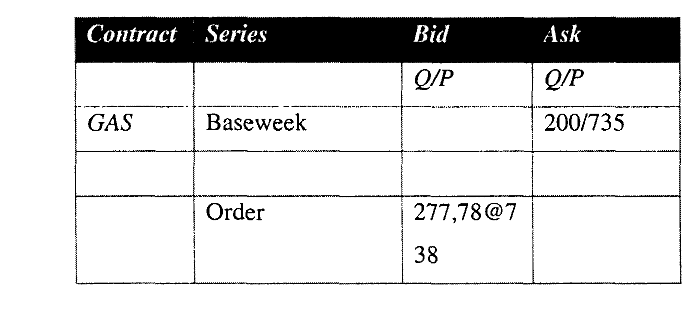

Will result in a match 200 lots @ $735 per lot, which will be converted to a trade for Trader 1 72 000 GJ @ $2,04 per GJ.

### In example 3

With the following order book (only best price shown):

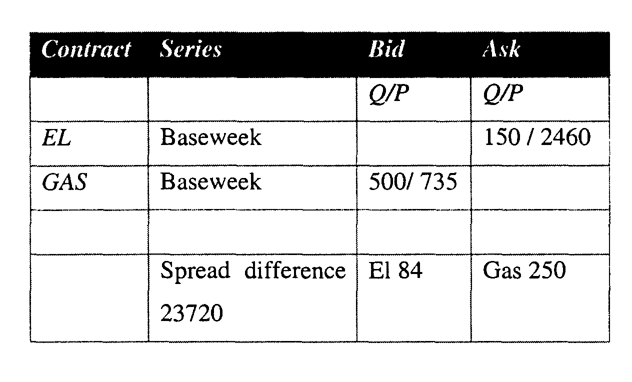

As the difference 84@2460 (= 206 640) and 250@735 (= 183 750) will give the total price to $22 890 for the whole spread, which is less then the max order value of $23720 Thus, there will be a deal and the trade will be reported to the trader as:
Buy El week 50MW@ $ 24,60 per MWh and sell Gas week 90 000 GJ @ $7,35 per MWh

The user having entered the order will see a new trade has occurred as: El 50 MW @ $24,60 and Gas 90 000 @ $2,04

The use of a conversion of orders sent to/from the system will also facilitate the processing and generation of derived orders within an automated exchange system providing such functionality.

For example, assume that the marketplace lists electricity contracts for whole days, weeks, months and so on. If a trader is of the opinion that an average price of 19.5 $/MWh for a weekend contract is attractive for him he can send a combination order including Saturday and Sunday and the average price $19.5. However, depending on how the marketplace has specified its instruments, the bid must be in accordance to the definitions of the market place.

Assume the marketplace has defined the day instrument such that one lot is 24 MWh and the price is given in $/lot. Assume further that trader wants to buy 20 MW for the whole weekend and thus sends a combination bid of 20 lots and the price 48*19.5 = 936$. The calculation is not that difficult but if using instruments covering different periods such as month and weeks and more then two instruments the risk errors will increase significantly. Another risk is that the trader will miss the opportunity to hit a bid displayed by the market place, because the trader doesn't immediately recognize that the combination contract price 4936 is the same as the average price $19.5/MWh.

If the marketplace instead use the instrument specification where 1 lot is defined as 1 MW for the delivery period and the price is set in $ per MWh the trader must submit a combination bid of 20 lots for the price of $39. As the bid price shall include the two series with the same delivery time and thus the trader must double the price he is willing to pay per day.

In practice if the marketplace allows combination between many instruments covering different delivery periods and different energy units it will be very difficult to understand what a combination bid really represents. A trader trading physical energy is familiar with the price of energy per unit - either per MWh or per GJ.

If the marketplace includes functionality to calculate derived orders (baits), these can easily cause confusion. For example, using the example above and assuming that marketplace lists its orders as $/lot, where one lot is 24 MWh when calculating derived orders, and the order book includes sell prices for Saturday (19$/MWh or 456$/lot). However, no prices for Sunday are stored in the order book. The trader then expect a derived order to be calculated from the combination bid for Sunday will be a buy price of 20 $/MWh or 480$/lot. The price will hopefully be attractive to a seller and if a seller sends a sell order with price $20 or better there will be a match between the combination order and the two single orders in the order book.

If the example instead would include two instruments with different delivery periods the calculation will be more complicated as the marketplace needs to use the delivery period in the calculation. For example, if the trader wants a combination of Sunday and next week with the average price of 19.5 $/MWh (or 19.5*8*24 = 3744 $ for the combination), and the order book contains a sell price for the week of 20$/MWh, the bait calculation must take into account the difference in the delivery periods. Thus, to get an average price of $19.5 having $20 during 168 hours requires a contract of $16 for Sunday as 20*168 + 16*24 = 3744.

For the marketplace it will be easier to verify all combinations when a bid arrives if the instruments are specified as lots and price per lot and the adaptation to the trader preferred units takes place before the order enters the order book or matching module. Also the computational load on the central server hosting the matching unit and the order will be much lower, which is advantageous since the load is one bottle neck in existing automated exchange systems.

In the examples given above the conversion or translation is performed in the gateway 111. The conversion can however equally well be performed at the marketplace, i.e. in the server 112 or in the input terminal 110 or anywhere else along the path from the input terminal to the server 112 as long as the function will be the same. One application when this can prove beneficial is when a trader is connected directly to the market place, typically using an Internet connection.

In many systems it is however preferred to locate the format conversion in the gateway because it would require the conversion to be installed in one or a few gateways instead of in a multitude of input terminals. Also, the server hosting the market place would not be burdened with additional computational load.

## Claims

1. In an automated exchange system, a method of trading energy contracts, the method comprising the steps of:
- receiving from a number of traders orders for different types of energy contracts traded at the automated exchange,
- in the system converting the orders to a specified format,
- in the system performing various tasks relevant to each incoming order using said specified format, and
- re-converting information from the system relating to each incoming order and/or market related information into a format preferred by the trader before displaying the information to the trader.

2. The method according to claim 1, wherein the system is designed to trade natural gas and/or electricity contracts.

3. The method according to any of claims 1 or 2, wherein the format conversion is performed in a gateway unit constituting an interface between a number of input terminals and a centrally located computer server executing matching of orders entered into the system.

4. The method according to any of claims 1 or 2, wherein the format conversion is performed in a unit constituting an interface between the centrally located computer server executing matching of orders entered into the system and the connection to the Internet.

5. The method according to any of claims 1 - 4, wherein the conversion and/or reconversion is performed using information relating to instrument specifications of financial instruments traded in the exchange system.

6. The method according to any of claims 1 - 5, wherein the conversion and/or reconversion is performed using log on information associated with each user logging on to the exchange system.

7. An automated exchange system for trading energy contracts comprising:
- means for receiving orders for different types of energy contracts traded at the automated exchange from a number of traders,
- means for converting the orders to a specified format, and
- means for re-converting information from the system relating to each incoming order and/or market related information into a format preferred by the trader before displaying the information is to the trader.

8. The system according to claim 5, where the system is designed to trade natural gas and/or electricity contracts.

9. The system according to any of claims 5 or 6, when a gateway constituting an interface between a number of input terminals and a centrally located computer server executing matching of orders is provided in the system and wherein said means for order conversion is located inside said gateway unit.

10. The system according to any of claims 5 or 6, where a format conversion unit is provided centrally in close connection to a centrally located computer server executing matching of orders and wherein the format conversion is performed in said conversion unit.

11. The method according to any of claims 6 - 10, wherein the conversion means are connected to a memory storing information relating to instrument specifications of financial instruments traded in the exchange system.

12. The method according to any of claims 6-11, wherein the conversion means are adapted to perform translation in response to log on information associated with each user logging on to the exchange system.

13. A computer program product for use in an automated exchange system, the program, when executed by a computer performing the following steps in an automated exchange system:
- receiving from a number of traders orders for different types of energy contracts traded at the automated exchange,
- in the system converting the orders to a specified format for the system to work on and,
- re-converting information from the system relating to each incoming order and/or market related information into a format preferred by the trader before displaying the information to the trader.

14. The computer program product according to claim 9, wherein the system is designed to trade natural gas and/or electricity contracts.
